# FASCICULE DE BREVET EUROPEEN

(11) **EP 3 527 372 B1**
(45) Date de publication et mention de la délivrance du brevet: **06.10.2021**
(21) Numéro de dépôt: 19156597.7
(22) Date de dépôt: 12.02.2019
(51) Int. Cl.: B32B 37/14, B32B 3/12, B61D 37/00

(54) **PROCÉDÉ DE FABRICATION D'UN PANNEAU D'ÉQUIPEMENT DE VÉHICULE FERROVIAIRE ET PANNEAU D'ÉQUIPEMENT DE VÉHICULE FERROVIAIRE**
HERSTELLUNGSVERFAHREN EINES PANEELS EINES SCHIENENFAHRZEUGS UND PANEEL EINES SCHIENENFAHRZEUGS
METHOD FOR MANUFACTURING A PANEL OF A RAIL VEHICLE AND PANEL OF A RAIL VEHICLE

(30) Priorité: 14.02.2018 FR 1851237
(43) Date de publication de la demande: 21.08.2019
(73) Titulaire: ALSTOM Transport Technologies, 93400 Saint-Ouen (FR)
(72) Inventeur: LANGLOIS, Francis, 59310 Faumont (FR); LEBER, Yohan, 59300 Valenciennes (FR); MOHAMMAD, Zeeshan Malik, 93270 Sevran (FR)
(74) Mandataire: Lavoix

(56) Documents cités:
- JP-B2- 3 032 028
- US-A- 4 076 877
- US-A1- 2006 000 186
- US-B1- 6 403 195

## Description

La présente invention concerne un procédé de fabrication d'un panneau d'équipement de véhicule ferroviaire.

Un tel panneau est par exemple destiné à la fabrication d'une table équipant le véhicule ferroviaire, d'une tablette rabattable équipant une telle table, ou de tout équipement nécessitant un panneau plan dont les bords sont destinés à recevoir ou non une finition.

Des exemples de panneaux sont décrits dans US 2006/000186 et US 6 403 195.

Le panneau comporte habituellement une âme alvéolaire intercalée entre des première et seconde peaux parallèles. Le contour du panneau est usiné pour lui donner une forme prédéterminée. Puis, la paroi latérale périphérique du panneau (également appelée « chant ») est assemblée avec une pièce moulée.

La fabrication d'un tel panneau requiert de nombreuses opérations onéreuses.

L'invention a notamment pour but de réduire le temps de fabrication et le coût d'un tel panneau.

A cet effet, l'invention a notamment pour objet un procédé de fabrication d'un panneau d'équipement de véhicule ferroviaire, selon la revendication 1.

La résine est introduite dans la zone périphérique, en remplissant les alvéoles de cette zone périphérique. Ainsi, cette résine permet à la fois d'assurer l'assemblage de l'âme alvéolée avec les première et seconde peaux, et également renforce l'âme alvéolée.

En outre, le contour étant usiné dans cette même zone périphérique, la résine polymérisée forme, dans le contour usiné, une surface relativement continue, ce qui peut former directement une finition ou qui permet un assemblage simple d'une peau latérale avec le chant du panneau. Cette peau latérale peut ainsi être aisément collée sur le chant du panneau.

Il en résulte que le temps de fabrication du panneau est significativement réduit par rapport au temps de mise en œuvre d'un procédé de fabrication de l'état de la technique.

Le procédé de fabrication selon l'invention peut comporter en outre l'une ou plusieurs des caractéristiques suivantes, prises seules ou selon toutes combinaisons techniquement envisageables.
- Le procédé de fabrication comporte, suite à l'étape d'usinage, une troisième étape d'assemblage d'une peau latérale sur un chant du panneau au contour usiné.
- Le procédé de fabrication comporte, suite à la troisième étape d'assemblage, une étape de découpe de la peau latérale au moyen d'une affleureuse.
- La troisième étape d'assemblage comporte le collage de la peau latérale sur le chant du panneau.
- Le procédé de fabrication comporte, suite à la troisième étape d'assemblage, une étape d'insertion d'au moins un élément de fixation dans le chant du panneau.
- L'étape d'insertion comporte l'usinage d'un emplacement de réception de l'élément de fixation dans le chant, puis la solidarisation, par exemple par collage, de l'élément de fixation dans l'emplacement de réception.
- Un pochoir est disposé sur l'âme alvéolaire préalablement à l'étape de remplissage, le pochoir délimitant la zone périphérique.
- La première étape d'assemblage est réalisée par simple pose de l'âme alvéolaire sur la première peau.

L'invention concerne également un panneau d'équipement de véhicule ferroviaire selon la revendication 7.

Ce panneau est issu directement du procédé de fabrication tel que défini précédemment.

Avantageusement, le panneau comporte une peau latérale assemblée à un chant de ce panneau, la peau latérale étant au moins en partie solidarisée au contact de la résine de la zone périphérique, sur ladite surface sensiblement continue.

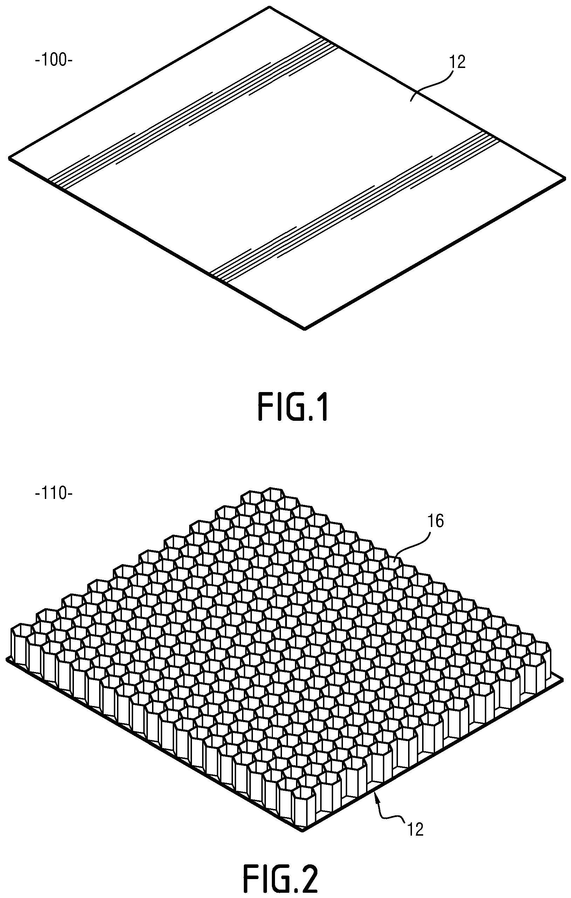

L'invention sera mieux comprise à la lecture de la description qui va suivre, donnée uniquement à titre d'exemple et faite en se référant aux figures annexées, parmi lesquelles les figures 1 à 6 sont des vues en perspective d'un panneau au cours de différentes étapes de fabrication selon un procédé selon un exemple de mode de réalisation de l'invention.

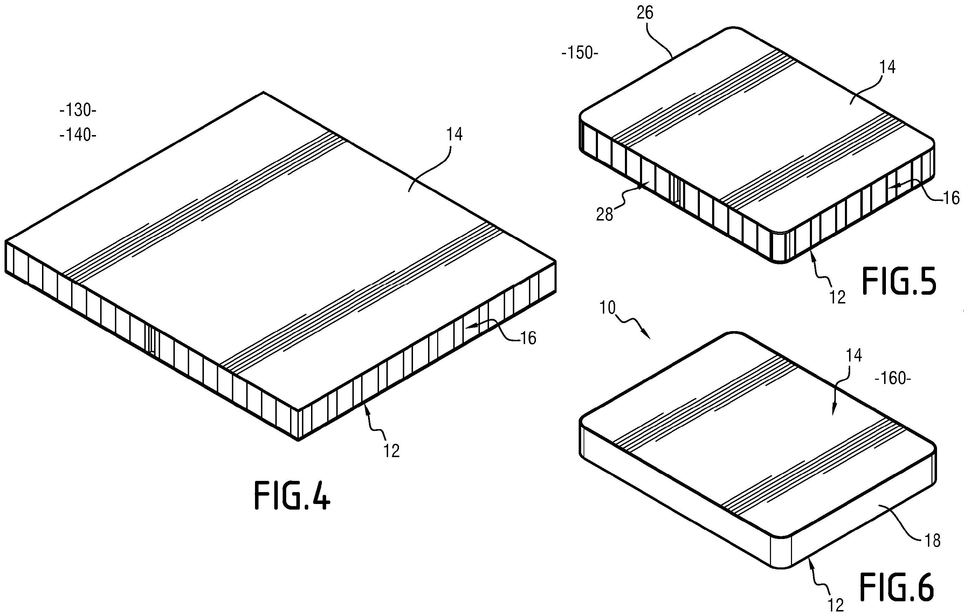

Le panneau terminé issu du procédé selon l'invention est représenté sur la figure 6, et sera désigné par la référence générale 10. Un tel panneau 10 est par exemple destiné à former une table de véhicule ferroviaire, équipant une salle de passagers, ou encore une tablette rabattable d'une telle table ou tout panneau plan destiné à l'aménagement intérieur.

Le panneau 10 comporte une première peau 12 et une seconde peau 14 de préférence parallèles, entre lesquelles une âme alvéolée 16 (visible sur la figure 2) est intercalée. Dans l'exemple décrit, le panneau 10 comporte également une peau latérale 18, s'étendant perpendiculairement ou en formant un angle quelconque avec les première 12 et seconde 14 peaux, entourant un chant du panneau 10, c'est-à-dire entourant une paroi latérale périphérique du panneau 10.

Le procédé de fabrication du panneau 10 va maintenant être décrit, les différentes étapes de ce procédé étant représentées sur les figures 1 à 6.

Comme cela est représenté sur la figure 1, le procédé de fabrication comporte une étape 100 de fourniture de la première peau 12.

Comme cela est représenté sur la figure 2, le procédé de fabrication comporte ensuite une première étape 110 d'assemblage de la première peau 12 avec l'âme alvéolaire 16. Plus particulièrement, au cours de cette première étape d'assemblage 110, l'âme alvéolaire 16 est posée sur la première peau 12, cette âme alvéolaire 16 étant agencée de sorte que ses alvéoles s'étendent perpendiculairement à la première peau 12. En d'autres termes, au cours de cette première étape d'assemblage 110, l'âme alvéolaire 16 est agencée de sorte qu'un axe central autour duquel s'étend chaque alvéole est orienté perpendiculairement à la première peau 12.

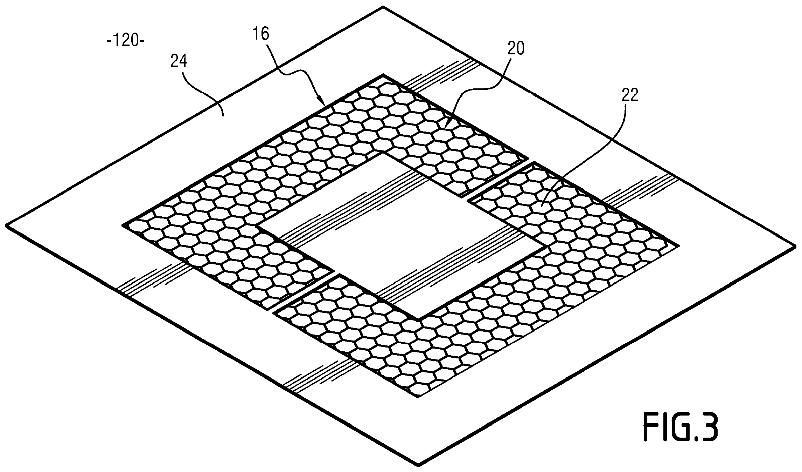

Comme cela est représenté sur la figure 3, le procédé de fabrication comporte ensuite une étape 120 de remplissage d'une zone périphérique 20 de l'âme alvéolaire 16 avec une résine 22.

A cet effet, un pochoir 24 est avantageusement disposé sur l'âme alvéolaire 16 avant le remplissage, ce pochoir 24 délimitant la zone périphérique 20.

De manière alternative, l'intégralité de l'âme alvéolaire 16 est remplie de résine 22.

Les alvéoles étant perpendiculaires à la première peau 12, la résine remplit ces alvéoles, entre la première peau 12 jusqu'à l'extrémité supérieure de ces alvéoles.

Comme cela est représenté sur la figure 4, le procédé comporte ensuite une seconde étape 130 d'assemblage de la seconde peau 14 avec l'âme alvéolaire 16. Bien entendu, dans le cas où le pochoir 24 a été utilisé, celui-ci est retiré avant l'assemblage avec la seconde peau 14.

Le procédé comporte ensuite une étape 140 de polymérisation de la résine, solidarisant ainsi l'âme alvéolée 16 emplie de résine 22 avec la première peau 12 d'une part et la seconde peau 14 d'autre part. Cette polymérisation est par exemple effectuée en chauffant la résine.

Le procédé comporte ensuite une étape 150 d'usinage d'un contour 26 du panneau 10. Ce contour 26, représenté sur la figure 5, est défini dans un plan parallèle aux première 12 et/ou seconde 14 peaux, et usiné dans la zone périphérique 20.

L'usinage de ce contour 26 permet de donner au panneau 10 sa forme prédéfinie souhaitée.

L'usinage étant effectué dans la zone périphérique 20, les alvéoles découpées sont emplies de résine polymérisée. Il en résulte que le chant 28 du panneau 10 est formé par une surface périphérique sensiblement continue. Cette surface périphérique 28 est adaptée pour recevoir la troisième peau 18, par exemple par simple collage. La peau latérale 18 est donc au moins en partie solidarisée au contact de la résine 22 de la zone périphérique 20.

Ainsi, le procédé comporte ensuite une troisième étape 160 d'assemblage de la peau latérale 18 sur le chant 28 du panneau 10 au contour 26 usiné. La peau latérale 18 est également appelée « bande de chant ».

Il est à noter que le contour 26 peut présenter toute forme souhaitée, le procédé selon l'invention permettant un assemblage aisé de la peau latérale 18 avec le chant 28 quelle que soit la forme du contour 26.

Avantageusement, le procédé comporte ensuite une étape de découpe de la peau latérale 18 à l'affleureuse, de sorte que la peau latérale 18 affleure correctement avec les première 12 et seconde 14 peaux.

Il apparaît clairement que le procédé selon l'invention permet de simplifier le bordurage du panneau 10. En particulier, la bande de chant 18 est plus économique à mettre en œuvre, à l'achat et au montage, que des pièces moulées habituellement assemblées au chant des panneaux de l'état de la technique. En outre, le procédé selon l'invention est plus simple à mettre en œuvre qu'un procédé de l'état de la technique.

Enfin, la zone périphérique 20 étant emplie de résine, sa rigidité structurelle est plus importante que celle d'un panneau de l'état de la technique.

Si cela est nécessaire, le procédé comporte en outre une étape d'insertion d'au moins un élément de fixation dans le chant 28 du panneau 10.

Par exemple, dans le cas où le panneau 10 forme une tablette rabattable, l'élément de fixation est une charnière de liaison de ce panneau 10 à un autre panneau formant une table. Cet autre panneau est de préférence réalisé également par le procédé selon l'invention.

La forte rigidité structurelle de la zone périphérique du panneau 10 permet un assemblage efficace avec l'élément de fixation.

Cet élément de fixation peut être assemblé de manière classique au panneau 10. Par exemple, un emplacement pour cet élément de fixation est usiné dans le chant 28 du panneau 10, et l'élément de fixation est collé dans cet emplacement.

On notera que l'invention n'est pas limitée au mode de réalisation précédemment décrit, mais pourrait présenter diverses variantes complémentaires.

En particulier, le contour 26 pourrait présenter toute autre forme envisageable, et le panneau 10 pourrait être destiné à un autre équipement de véhicule ferroviaire.

## Revendications

1. Procédé de fabrication d'un panneau d'équipement (10) de véhicule ferroviaire, le panneau (10) comportant une âme alvéolaire (16) intercalée entre des première (12) et seconde (14) peaux, comportant :
- une étape (100) de fourniture de la première peau (12),
- une première étape (110) d'assemblage de la première peau (12) avec l'âme alvéolaire (16), l'âme alvéolaire (16) étant agencée de sorte que ses alvéoles s'étendent sensiblement perpendiculairement à la première peau (12),
- une étape (120) de remplissage d'une zone périphérique (20) de l'âme alvéolaire (16) avec une résine (22),
- une seconde étape (130) d'assemblage de la seconde peau (14) avec l'âme alvéolaire (16),
- une étape (140) de polymérisation de la résine (22), solidarisant ainsi l'âme alvéolaire (16) avec la première (12) et la seconde (14) peaux,
- une étape (150) d'usinage d'un contour (26) du panneau (10), le contour (26) étant défini dans un plan parallèle aux première (12) et/ou seconde (14) peaux, et usiné dans la zone périphérique (20),
- suite à l'étape d'usinage (150), une troisième étape (160) d'assemblage d'une peau latérale (18) sur un chant (28) du panneau (10) au contour (26) usiné,
**caractérisé en ce que** la troisième étape d'assemblage (160) comporte le collage de la peau latérale (18) sur le chant (28) du panneau (10), la peau latérale (18) étant collée à la résine usinée.

2. Procédé de fabrication selon la revendication 1 comportant, suite à la troisième étape d'assemblage (160), une étape de découpe de la peau latérale (18) au moyen d'une affleureuse.

3. Procédé de fabrication selon l'une quelconque des revendications précédentes, comportant, suite à la troisième étape d'assemblage (160), une étape d'insertion d'au moins un élément de fixation dans le chant (28) du panneau (10).

4. Procédé de fabrication selon la revendication 3 ; dans lequel l'étape d'insertion comporte l'usinage d'un emplacement de réception de l'élément de fixation dans le chant (28), puis la solidarisation, par exemple par collage, de l'élément de fixation dans l'emplacement de réception.

5. Procédé de fabrication selon l'une quelconque des revendications précédentes, dans lequel un pochoir (24) est disposé sur l'âme alvéolaire (16) préalablement à l'étape de remplissage (120), le pochoir (24) délimitant la zone périphérique (20).

6. Procédé de fabrication selon l'une quelconque des revendications précédentes, dans lequel la première étape (110) d'assemblage est réalisée par simple pose de l'âme alvéolaire (16) sur la première peau (12).

7. Panneau d'équipement (10) de véhicule ferroviaire, comportant une âme alvéolaire (16) intercalée entre des première (12) et seconde (14) peaux, dans lequel :
- la première peau (12) est assemblée avec l'âme alvéolaire (16), l'âme alvéolaire (16) étant agencée de sorte que ses alvéoles s'étendent sensiblement perpendiculairement à la première peau (12),
- l'âme alvéolaire comporte une zone périphérique (20) remplie de résine (22), le contour périphérique du panneau étant usiné dans cette zone périphérique, si bien que la résine (22) polymérisée forme, dans ce contour usiné, une surface sensiblement continue,
- le panneau comporte une peau latérale (18) assemblée sur un chant (28) du panneau (10),
**caractérisé en ce que** la peau latérale (18) est collée sur le chant (28) du panneau (10), la peau latérale (18) étant collée à la résine usinée.

## Patentansprüche

1. Verfahren zur Herstellung eines Ausrüstungspaneels (10) eines Schienenfahrzeugs, wobei das Paneel (10) aufweist ein alveolares Innenblatt (16), das zwischen einer ersten (12) und einer zweiten (14) Haut zwischengeschachtelt ist, aufweisend:
- einen Schritt (100) des Bereitstellens der ersten Haut (12),
- einen ersten Schritt (110) des Zusammenbauens der ersten Haut (12) mit dem alveolaren Innenblatt (16), wobei das alveolare Innenblatt (16) derart eingerichtet ist, dass sich seine Alveolen im Wesentlichen senkrecht zu der ersten Haut (12) erstrecken,
- einen Schritt (120) des Füllens eines peripheren Bereichs (20) des alveolaren Innenblatts (16) mit einem Harz (22),
- einen zweiten Schritt (130) des Zusammenbauens der zweiten Haut (14) mit dem alveolaren Innenblatt (16),
- einen Schritt (140) des Polymerisierens des Harzes (22), sodass das alveolare Innenblatt (16) mit der ersten (12) und der zweiten (14) Haut fest verbunden wird,
- einen Schritt (150) der maschinellen Bearbeitung (26) einer Kontur (26) des Paneels (10), wobei die Kontur (26) definiert ist in einer Ebene parallel zu der ersten (12) und/oder der zweiten (14) Haut, und maschinell bearbeitet wird im peripheren Bereich (20),
- im Anschluss an den Schritt des maschinellen Bearbeitens (150) einen dritten Schritt (160) des Montierens einer lateralen Haut (18) auf eine Stirnseite (28) des Paneels (10) an der maschinell bearbeiteten Kontur (26),
**dadurch gekennzeichnet, dass** der dritte Schritt des Montierens (160) aufweist das Kleben der lateralen Haut (18) auf die Stirnseite (28) des Paneels (10), wobei die laterale Haut (18) auf das maschinell bearbeitete Harz geklebt wird.

2. Verfahren zur Herstellung gemäß Anspruch 1, aufweisend, im Anschluss an den dritten Schritt des Montierens (160), einen Schritt des Zuschneidens der lateralen Haut (18) mittels eines Kantenfräsers.

3. Verfahren zur Herstellung gemäß irgendeinem der vorhergehenden Ansprüche, aufweisend, im Anschluss an den dritten Schritt des Montierens (160), einen Schritt des Einsetzens wenigstens eines Fixierelements in die Stirnseite (28) des Paneels (10).

4. Verfahren zur Herstellung gemäß Anspruch 3, wobei der Schritt des Einsetzens aufweist das maschinelle Bearbeiten eines Orts zur Aufnahme des Fixierelements in der Stirnseite (28), dann das feste Verbinden, zum Beispiel durch Kleben, des Fixierelements an dem Aufnahmeort.

5. Verfahren zur Herstellung gemäß irgendeinem der vorhergehenden Ansprüche, wobei eine Schablone (24) auf dem alveolaren Innenblatt (16) angeordnet wird vor dem Schritt des Füllens (120), wobei die Schablone (24) den peripheren Bereich (20) begrenzt.

6. Verfahren zur Herstellung gemäß irgendeinem der vorhergehenden Ansprüche, wobei der erste Schritt (110) des Zusammenbauens realisiert wird durch einfaches Auflegen des alveolaren Innenblatts (16) auf die erste Haut (12).

7. Schienenfahrzeug-Ausrüstungspaneel (10), aufweisend ein alveolares Innenblatt (16), das zwischen einer ersten (12) und einer zweiten (14) Haut zwischengeschachtelt ist, wobei:
- die erste Haut (12) mit dem alveolaren Innenblatt (16) zusammengebaut ist, wobei das alveolare Innenblatt (16) derart eingerichtet ist, dass sich seine Alveolen im Wesentlichen senkrecht zu der ersten Haut (12) erstrecken,
- das alveolare Innenblatt einen peripheren Bereich (20) aufweist, der mit Harz (22) gefüllt ist, wobei die periphere Kontur des Paneels in diesem peripheren Bereich maschinell bearbeitet ist, sodass das polymerisierte Harz (22), in dieser maschinell bearbeiteten Kontur, eine im Wesentlichen stufenlose Fläche bildet,
- das Paneel eine laterale Haut (18) aufweist, die auf eine Stirnseite (28) des Paneels (10) montiert ist,
**dadurch gekennzeichnet, dass** die laterale Haut (18) auf die Stirnseite (28) des Paneels (10) geklebt ist, wobei die laterale Haut (18) auf den maschinell bearbeiteten Harz geklebt ist.

## Claims

1. A method for manufacturing an equipment panel (10) of a railway vehicle, the panel (10) including a cellular core (16) inserted between first (12) and second (14) skins, including:
- a step (100) for providing the first skin (12),
- a first step (110) for assembling the first skin (12) with the cellular core (16), the cellular core (16) being arranged such that its cells extend substantially perpendicular to the first skin (12),
- a step (120) for filling a peripheral zone (20) of the cellular core (16) with a resin (22),
- a second step (130) for assembling the second skin (14) with the cellular core (16),
- a step (140) for polymerization of the resin (22), thus securing the cellular core (16) with the first (12) and second (14) skins,
- a step (150) for machining a contour (26) of the panel (10), the contour (26) being defined in a plane parallel to the first (12) and/or second (14) skins, and machined in the peripheral zone (20),
- after the machining step (150), a third step (160) for assembling a lateral skin (18) on an edge (28) of the panel (10) with the machined contour (26),
**characterized in that** the third assembling step (160) comprises gluing the lateral skin (18) on the edge (28) of the panel (10), the lateral skin (18) being glued to the machined resin.

2. The manufacturing method according to claim 1, including, including, after the third assembly step (160), a step for cutting the lateral skin (18) using a router plane.

3. The manufacturing method according to any of preceding claims, including, after the third assembly step (160), a step for inserting at least one fastening element in the edge (28) of the panel (10).

4. The manufacturing method according to claim 3, wherein the insertion step includes machining a location for receiving the fastening element in the edge (28), then securing, for example by gluing, the fastening element in the receiving location.

5. The manufacturing method according to any one of the preceding claims, wherein a stencil (24) is arranged on the cellular core (16) before the filling step (120), the stencil (24) delimiting the peripheral zone (20).

6. The manufacturing method according to any one of the preceding claims, wherein the first assembly step (110) is carried out by simply placing the cellular core (16) on the first skin (12).

7. An equipment panel (10) for a railway vehicle, including a cellular core (16) inserted between first (12) and second (14) skins, wherein:
- the first skin (12) is assembled with the cellular core (16), the cellular core (16) being arranged such that its cells extend substantially perpendicular to the first skin (12),
- the cellular core comprises a peripheral zone (20) filled with a resin (22), the peripheral contour of the panel being machined in this peripheral zone, so that the polymerized resin (22) forms, in this machined contour, a substantially continuous surface,
- the panel comprises a lateral skin (18) arranged on an edge (28) of the panel (10),
**characterized in that** the lateral skin (18) is glued on the edge (28) of the panel (10), the lateral skin (18) being glued to the machined resin.
